# EUROPÄISCHE PATENTANMELDUNG

(11) **EP 1 180 608 A1**
(43) Veröffentlichungstag der Anmeldung: **20.02.2002**
(21) Anmeldenummer: 01119257.2
(22) Anmeldetag: 09.08.2001
(51) Int. Cl.: F16B 13/00

(54) **Einschraubdübel**

(30) Priorität: 11.08.2000 DE 10039294
(71) Anmelder: Tox-Dübel-Werk R.W. Heckhausen GmbH & Co. KG, D-78351 Bodman-Ludwigshafen (DE)
(72) Erfinder: Leible, Dieter, 78234 Engen-Bittelbrunn (DE)
(74) Vertreter: Koch, Günther, Dipl.-Ing.

(57) **Zusammenfassung**

Es wird ein Einschraubdübel aus Kunststoff beschrieben, der insbesondere in Gipskartonplatten einschraubbar ist und so ausgebildet ist, daß beim Einschrauben der Werkstoff nicht oder nur geringfügig komprimiert wird, um ein Ausbrechen des spröden Materials zu verhindern. Zu diesem Zweck weist der Einschraubdübel im Dübelfuß ein eingeformtes metallisches Plättchen (28) auf, das als Schneidwerkzeug dient und aus dem Wandwerkstoff ein Loch ausschneidet, in das der Dübelschaft (10) einpaßt. Zweckmäßigerweise steht das Schneidplättchen (28) seitlich um einen geringen Betrag über den Dübelschaft (10) vor, so daß das eingeschnittene Loch im Durchmesser etwas größer ist als der Dübelschaft (10). Zum selbsttätigen Einschneiden in dieses so geschaffene Dübelloch trägt der Dübelschaft ein selbstschneidendes, flaches Spitzgewinde (14), dessen Außendurchmesser vom Dübelfuß (26) nach dem Dübelkopf hin zunimmt. Der Dübelschaft weist ein Einsatzloch für eine Schraube auf, mit der Gegenstände an der Gipskartonplatte festlegbar sind. Als Befestigungsschraube findet eine Schraube mit zylindrischem Schaft und zylindrischem Außengewinde Anwendung, wobei der Außendurchmesser des Schraubengewindes gleich oder etwas größer ist als der Durchmesser des im Verankerungsbereich des Dübels liegenden Durchgangslochs. Im Dübelfuß (26) weist der Dübel ein Sackloch (22) geringeren Durchmessers auf, so daß beim Eindrehen der Schraube eine Aufspreizung des Dübelfußes erfolgt, die durch radiale Schlitze begünstigt wird. Das Schneidplättchen (28) ist im Dübelfuß (26) eingespritzt und radial und axial im Dübelfuß abgestützt.

## Beschreibung

Die Erfindung betrifft einen Einschraubdübel aus Kunststoff mit einem zylindrischen Schaft, dessen Außenmantel ein flaches Spitzgewinde trägt und der ein axiales Loch zum Eindrehen einer Schraube aufweist. Derartige Dübel werden benutzt, um Gegenstände an Bauwerksteilen festzulegen, die eine geringe Eigenfestigkeit besitzen.

Zur Festlegung in Isolierverkleidungen, die aus Hartschaumplatten, aus Polyurethan oder dergleichen bestehen können, werden Einschraubdübel benutzt, die beim Einschrauben sowohl eine radiale als auch eine axiale Verdichtung des Wandwerkstoffes bewirken, um so die Ausziehfestigkeit zu erhöhen. Zu diesem Zweck kann der Einschraubdübel in Form eines Spitzkegels ausgebildet sein, wobei das Außengewinde eine zur Spitze des Spitzkegels hin größer werdende Steigung aufweist. Ein derartiger Einschraubdübel ist aus der DE 35 21 338 A1 bekannt.

Ein dem gleichen Zweck dienender Einschraubdübel ist aus der DE 40 41 765 bekannt. Hierbei sind die Flankenwinkel der Gewindeflanken des Außengewindes im vorderen Bereich des Einschraubdübels flacher als im hinteren Bereich. Dadurch wird bewirkt, daß beim Einschrauben zunächst die flacheren Gewindeflanken im Bereich der Dübelspitze in den weichen Werkstoff eindringen und beim weiteren Einschrauben die Gewindeflanken allmählich kontinuierlich steiler werden, so daß der weiche Werkstoff mit zunehmender Einschraubtiefe des Dübels immer stärker verdichtet wird. Hierdurch soll dem Dübel ein hoher Halt in weichen Werkstoffen mit geringer Eigenfestigkeit verliehen werden.

Derartige Einschraubdübel mit axialer und radialer Verdichtung des Wandwerkstoffes sind jedoch ungeeignet zum Einsatz in weichem, porösem Material, beispielsweise in aus Gipskarton bestehenden Platten. Beim Einschrauben in derartige Werkstoffe führt die axiale und radiale Verdichtung zum Ausbrechen der durch Eindrehen des Dübels geschaffenen Bohrlochwandung, und es muß für diesen Anwendungszweck Sorge insbesondere dafür getragen werden, daß eine Verdichtung des Materials möglichst vermieden wird. Aus diesem Grunde werden in der Regel in Gipskartonwänden und Wänden aus ähnlich beschaffenen Werkstücken Löcher vorgebohrt, so daß sich der Dübel mit einem flachen Spitzgewinde nur noch in die Bohrlochwandung einzuschneiden braucht.

Um das zeitraubende Vorbohren der Löcher zu vermeiden, wird in der FR-A-26 53 503 vorgeschlagen, das Loch während des Eindrehens des Einschraubdübels zu bohren. Zu diesem Zweck wird ein drehfest mit dem Einschraubdübel verbindbares Bohrwerkzeug durch das axiale Durchgangsloch des Dübels eingeschoben, so daß es mit seiner metallischen Bohrspitze aus dem Dübelfuß vorsteht. Zur Unterstützung ist der Dübelfuß des zylindrischen Schaftes mit einer Bohrkrone versehen. Nach dem gleichzeitig erfolgenden Einbohren des Loches und Einschrauben des Dübels wird das Bohrwerkzeug wieder entnommen, und es kann in das axiale Loch eine Befestigungsschraube eingesetzt werden.

Der metallische Einsatzbohrer gewährleistet in diesem Falle das Einbohren eines sauberen zylindrischen Loches, was beim Eintreiben eines Kunststoffdübels nicht gewährleistet werden kann, selbst wenn dessen Spitze mit zu einem Bohrkranz ausgeformt ist, weil der verwendete Kunststoff zu weich ist, um sich in den spröden Gipskarton einzugraben.

Der Erfindung liegt daher die Aufgabe zugrunde, einen gattungsgemäßen Einschraubdübel derart auszubilden, daß er ohne Vorbohren eines Loches und ohne Verwendung eines Zusatzbohrwerkzeugs schnell in eine Gipskartonwand eingedreht werden kann, ohne daß die Lochwandung ausbricht, so daß über die Gewindeflanken eine formschlüssige Abstützung mit hohem Ausziehwert erhalten werden kann.

Gelöst wird die gestellte Aufgabe durch die im Kennzeichnungsteil des Patentanspruchs 1 angegebenen Merkmale.

Das metallische Schneidwerkzeug, welches beim Spritzvorgang des Dübels formschlüssig mit diesem verbunden wird, bewirkt ein sicheres Einschneiden in dem Gipskarton, wobei zweckmäßigerweise der Durchmesser des Schneidwerkzeuges etwas größer ist als der Durchmesser des das Gewinde tragenden Schaftes.

Es hat sich gezeigt, daß als Schneidwerkzeug ein Metallplättchen geeignet ist, das in einen Durchmesserschlitz des Schaftes am Dübelfuß einsteht und eine Schneidspitze aufweist, die einen Spitzenwinkel von ca. 116° aufweist. Dieses Metallplättchen steht mit seinen achsparallelen seitlichen Begrenzungsrändern über den Schaftdurchmesser vor, so daß das von dem Metallplättchen erzeugte Bohrloch etwas größer im Durchmesser ist als der Schaft. Das Plättchen ist zweckmäßigerweise axial und seitlich formschlüssig in dem Dübelfuß abgestüzt, in dem es beim Einspritzen eingeformt wird. Durchgangslöcher des Plättchens werden beim Spritzen eingeformt und verleihen einen zusätzlichen Halt während des Einbohrvorganges.

Die Dübellänge wird im allgemeinen so bemessen, daß der Dübel nach dem Einschrauben über die Innenseite der Wand vorsteht.

Nach einer zweckmäßigen Ausgestaltung der Erfindung ist das Durchgangsloch in diesem überstehenden Fußabschnitt des Dübels mit einem verringerten Durchmesser ausgestattet, so daß beim Eindrehen der Schraube in diesem Bereich eine Spreizung auftritt, wodurch die Ausziehkraft weiter vergrößert werden kann. Um das Aufspreizen zu erleichtern, ist der Schaft des Dübels in diesem Wandabschnitt mit Schlitzen versehen, die ein Aufspreizen des Dübels erleichtern. Beim Eindrehen der Schraube wird das mit Einbohrschneide versehene Metallplättchen ausgestoßen oder seitlich weggedrängt, so daß die Schraubenspitze aus dem Dübelfuß hervortreten kann.

Der Kopf des Einschraubdübels ist mit einem Werkzeugeinsatz, beispielsweise einem Kreuzschlitz, versehen.

Weitere Ausgestaltungen der Erfindung ergeben sich aus den Unteransprüchen.

Nachstehend wird ein Ausführungsbeispiel der Erfindung anhand der Zeichnung beschrieben. In der Zeichnung zeigen:

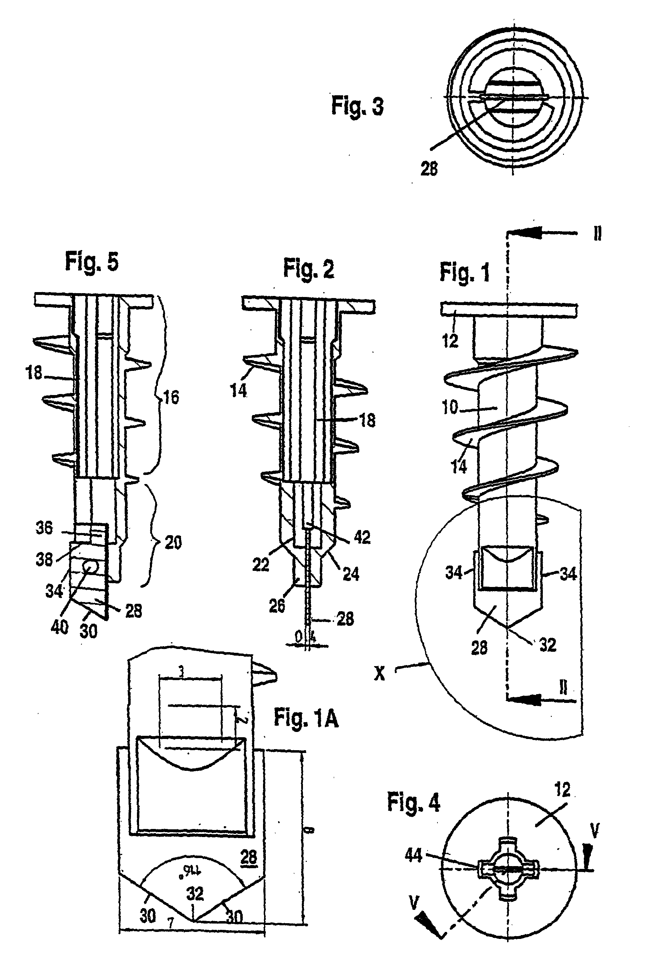

- Fig. 1: eine Seitenansicht eines erfindungsgemäß ausgebildeten Gipskartondübels;
- Fig. 1A: in größerem Maßstab die Einzelheit X gemäß Fig. 1;
- Fig. 2: einen Schnitt nach der Linie II-II gemäß Fig. 1;
- Fig. 3: eine axiale Ansicht des Dübels gemäß Fig. 1, vom Dübelfuß her betrachtet;
- Fig. 4: eine axiale Ansicht auf den Dübelkopf des Dübels gemäß Fig. 1;
- Fig. 5: einen Schnitt nach der Linie V-V gemäß Fig. 4;
- Fig. 6: eine Schnittansicht eines in einer Gipskartonplatte verankerten Dübels;
- Fig. 7: als Einzelheit in größerem Maßstab das in den Dübelfuß eingesetzte Metallplättchen.

Der in der Zeichnung dargestellte Gipskartondübel ist aus Kunststoff gespritzt und weist einen zylindrischen Schaft 10 und einen Kopfflansch 12 auf. Der Schaft trägt ein flaches, selbstschneidendes Spitzgewinde 14, welches so geformt und angeordnet ist, daß beim Eindrehen in den Gipskarton dieser einer möglichst geringen Kompression unterworfen wird.

Der Schaft des Dübels weist in seinem Verankerungsbereich 16 ein Schraubeneinsatzloch 18 auf, an das sich im Fußbereich 20 des Dübels ein Sackloch 22 mit geringerem Durchmesser anschließt. Im Bereich des Bodens des Sackloches verjüngt sich der Schaft mit zwei diametral gegenüberliegenden Abschrägungen 24 zu einem flachen Dübelfuß 26, in den ein Metallplättchen 28 eingeformt ist, welches zwei im Winkel von ca. 116° gegeneinander angestellte Schneidkanten 30 aufweist, die in der Dübelachse eine Schneidspitze 32 bilden. Das Schneidplättchen 28 weist zwei achsparallel verlaufende, radial über den Schaftdurchmesser vorstehende Seitenränder 34 auf. Der Spitze 32 gegenüberliegend weist das Metallplättchen 28 einen Fortsatz 36 auf, der in das Sackloch 22 einsteht, wodurch eine seitliche Abstützung an der Bohrlochwandung bewirkt wird. Mit den beiden seitlichen Schultern 38 ist das Metallplättchen im Dübelfuß axial abgestützt. Zur Verankerung des Plättchens im Dübelfuß weist dieses Löcher 40 auf, in die die Kunststoffmasse beim Spritzen des Dübels eindringt und eine feste Halterung gewährleistet.

In dem Fußbereich 20 weist der Schaft zwei diametral gegenüberliegende Schlitze 42 auf.

Im Kopfflansch 12 des Dübels befindet sich ein Werkzeugeinsatz, beispielsweise in Form eines Kreuzschlitzes 44.

Der Dübel wird mit einem Handwerkzeug oder maschinell in eine Gipskartonplatte 46 eingedreht. Dabei trifft die Schneidspitze mit den Schneidkanten auf die Gipskartonplatte 46 und fräst in diese ein Loch, das ein wenig größer im Durchmesser ist als der Dübelschaft 10. Es hat sich gezeigt, daß durch entsprechende Bemessung des Spitzenwinkels aus dem Gipskarton ein Loch mit glatten Seitenwänden ausgeschnitten werden kann. In die Wandung des so ausgeschnittenen Loches schneidet sich das Gewinde 14 ein. Ein sauberes Einschneiden ohne die Gefahr eines Ausbrechens wird dadurch unterstützt, daß die Höhe der Gewindeflanken vom Dübelfuß nach dem Dübelkopf hin zunimmt. Durch die Anordnung der flachen Gewindeflanken wird eine Kompression des Gipskartonwerkstoffs im wesentlichen vermieden. Das von den Spitzgewindeflanken in die Bohrlochwandung eingeschnittene Gewinde ergibt jedoch eine hohe Auszugsfestigkeit.

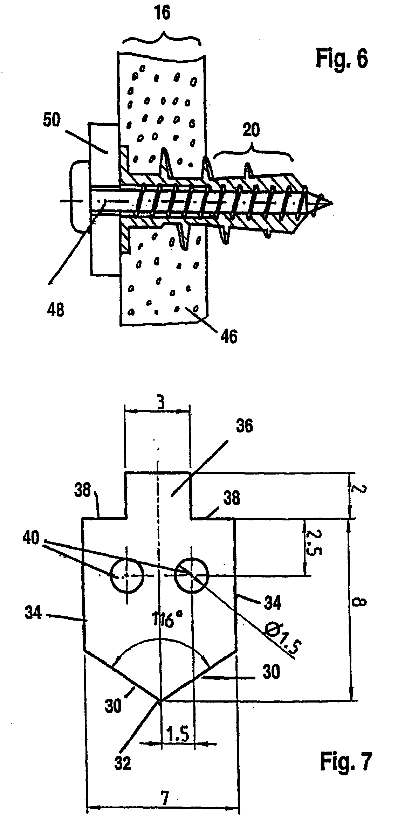

Wie aus Fig. 6 ersichtlich, liegt der Verankerungsbereich 16 des Dübels im Bereich der Gipskartonplatte 46. Der Fußbereich 20 steht nach innen über die Gipskartonplatte vor. Zur Festlegung eines Gegenstandes 50 an der Gipskartonplatte 46 wird eine Schraube 48 benutzt, die ein zylindrisches Außengewinde trägt, dessen Außendurchmesser gleich oder ein wenig größer ist als der Durchmesser des Einsatzloches 18. Sobald die Schraube jedoch das Sackloch 22 mit engerem Durchmesser erreicht hat, erfolgt ein Aufspreizen des Dübelschaftes in seinem Fußbereich 20, wobei der Dübelschaft im Fuß benachbart zu den Schlitzen 42 aufbricht, wie dies aus Fig. 6 ersichtlich ist. Dabei stößt die Schraube 48 das Metallplättchen 28 aus der Dübelspitze aus, oder die Schraube drängt das Plättchen mit dem anliegenden Schaftteil seitlich nach außen. Auf diese Weise wird eine zuverlässige Verankerung in einer Gipskartonplatte 46 erreicht. Der Dübel ist speziell zum Einsatz in spröden Gipskartonwerkstoffen konzipiert, jedoch auch in anderen Werkstoffen, beispielsweise weichen Werkstoffen mit geringer Eigenfestigkeit, einsetzbar.

### Bezugszeichenliste

- 10: Schaft
- 12: Kopfflansch
- 14: Spitzgewinde
- 16: Verankerungsbereich
- 18: Schraubeneinsatzloch
- 20: Fußbereich
- 22: Sackloch
- 24: Abschrägungen
- 26: Dübelfuß
- 28: Metallplättchen
- 30: Schneidkante
- 32: Schneidspitze
- 34: Seitenränder
- 36: Fortsatz
- 38: Schulter
- 40: Löcher
- 42: Schlitze
- 44: Kreuzschlitz
- 46: Gipskartonplatte
- 48: Schraube
- 50: Gegenstand

## Patentansprüche

1. Einschraubdübel aus Kunststoff mit einem zylindrischen Schaft (10), der ein axiales Loch (18, 22) zum Einsatz einer Schraube (48) aufweist und dessen Außenmantel ein selbstschneidendes, flaches Spitzgewinde (14) trägt,
**dadurch gekennzeichnet, daß** im Dübelfuß (26) ein metallisches Schneidwerkzeug (28) eingeformt ist.

2. Einschraubdübel nach Anspruch 1,
**dadurch gekennzeichnet, daß** das Schneidwerkzeug aus einem Metallplättchen (28) besteht, das mit Schneidkanten (30) axial über den Dübelfuß vorsteht, die eine Schneidspitze (32) bilden.

3. Einschraubdübel nach den Ansprüchen 1 und 2,
**dadurch gekennzeichnet, daß** die Schneidkanten (30) einen stumpfen Winkel von vorzugsweise 116° mit der Schneidspitze (32) als Scheitel einschließen.

4. Einschraubdübel nach den Ansprüchen 1 bis 3,
**dadurch gekennzeichnet, daß** das Schneitplättchen mit achsparallel verlaufenden Schneidrändern (34) über den Dübelschaft (10) vorsteht.

5. Einschraubdübel nach Anspruch 1,
**dadurch gekennzeichnet, daß** sich die radiale Höhe der Gewindeflanken des Spitzgewindes (14) vom Dübelfuß nach dem Dübelkopf hin vergrößert.

6. Einschraubdübel nach Anspruch 1,
**dadurch gekennzeichnet, daß** der Dübelschaft (10) im Verankerungsbereich (16) ein Schraubeneinsatzloch (18) aufweist, das im Fußbereich (20) in ein Sackloch (22) geringeren Durchmessers übergeht.

7. Einschraubdübel nach den Ansprüchen 2 und 6,
**dadurch gekennzeichnet, daß** das Schneidplättchen (28) mit einem seiner Spitze (32) gegenüberliegenden Fortsatz (36) in das Sackloch (22) einsteht.

8. Einschraubdübel nach einem der Ansprüche 1 bis 7,
**dadurch gekennzeichnet, daß** das Metallplättchen (28) Verankerungslöcher (40) aufweist.

9. Einschraubdübel nach Anspruch 1,
**dadurch gekennzeichnet, daß** der Schaft (10) im Fußbereich mehrere radial verlaufende Schlitze (42) aufweist.

10. Einschraubdübel nach einem der Ansprüche 1 bis 9,
**dadurch gekennzeichnet, daß** der Dübelkopf einen Werkzeugeinsatz, beispielsweise in Form eines Kreuzschlitzes (44), aufweist.

11. Schraube (48) zum Festlegen eines Gegenstandes (50) an einer Gipskartonplatte (46) unter Verwendung eines Einschraubdübels gemäß einem der Ansprüche 1 bis 10,
**dadurch gekennzeichnet, daß** die Schraube einen zylindrischen Schaft mit einem zylindrischen Außengewinde trägt, welches einen Außendurchmesser aufweist, der gleich oder etwas größer ist als der Außendurchmesser des Durchgangslochs (18), aber größer als der Durchmesser des Sacklochs (22).
